# EUROPÄISCHE PATENTSCHRIFT

(11) **EP 2 449 286 B1**
(45) Veröffentlichungstag und Bekanntmachung des Hinweises auf die Patenterteilung: **20.03.2013**
(21) Anmeldenummer: 10736974.6
(22) Anmeldetag: 17.06.2010
(51) Int. Cl.: B60K 6/44, B60W 10/08, B60W 30/19, B60W 20/00, B60W 10/02, F16H 3/54

(54) **ZWEI-GANG-GETRIEBE**
TWO-SPEED TRANSMISSION
BOITE A DEUX VITESSES

(30) Priorität: 02.07.2009 DE 102009033034
(43) Veröffentlichungstag der Anmeldung: 09.05.2012
(73) Patentinhaber: Schaeffler Technologies AG & Co. KG, 91074 Herzogenaurach (DE)
(72) Erfinder: REITZ, Dierk, 76530 Baden-Baden (DE)
(86) Internationale Anmeldenummer: PCT/DE2010/000693
(87) Internationale Veröffentlichungsnummer: WO 2011/000346

(56) Entgegenhaltungen:
- EP-A2- 0 391 215
- EP-A2- 1 437 534
- WO-A2-2010/063735
- DE-A1- 3 908 225
- DE-A1- 19 703 241
- DE-U1-202004 010 051
- JP-A- 2003 247 623
- US-A- 2 870 655
- US-A- 4 178 814
- US-A- 5 716 299
- US-A1- 2007 287 575

## Beschreibung

Die vorliegende Erfindung betrifft ein Zwei - Gang - Getriebe, wie ein Zwei - Gang - Planeten - Getriebe, für ein Fahrzeug, vorzugsweise für den Einsatz in einem Antriebsstrang für Elektrofahrzeuge, in einem Antriebsstrang für Hybridfahrzeuge oder in einem Zusatzantriebsstrang für Hybridfahrzeuge.

Ein Zwei-Gang-Getriebe mit den Merkmalen des Oberbegriffs des Anspruchs 1 ist aus der EP-A2-0391215, der EP-A2-1437534 oder der DE-A1-19703241 bekannt

Auch dei altere internationale Anmeldung WO-A2-2010/063735 zeigt ein solders Zwei-Gang-Getriebe.

Derzeit werden als Antriebssysteme für Elektrofahrzeuge hauptsächlich Ein-Gang-Getriebe, d. h. reine Untersetzungsstufen mit gegenüber einer Eingangsdrehzahl erniedrigter Ausgangsdrehzahl eingesetzt. Bei einem solchen Aufbau muss der Elektroantrieb jedoch den gesamten Drehzahlbereich abdecken, wodurch dessen Gesamtwirkungsgrad deutlich abnimmt. Außerdem ist der realisierbare Drehzahlbereich eher schmal.

Es wurde deshalb bereits vorgeschlagen, Zwei-Gang-Getriebe als Antriebssysteme für Elektrofahrzeuge zu verwenden, diese wurden bisher jedoch als konventionelle Handschaltgetriebe mit Schiebemuffe aufgebaut. Wird ein solches Getriebe eingesetzt, so kann die Elektromaschine kleiner dimensioniert werden, wodurch sich ein klarer Kostenvorteil ergibt. Gerade der Aufbau des Getriebes mit Schiebemuffe bedingt jedoch einen Zugkrafteinbruch während der Schaltung. Für automatisierte Triebstränge bedeutet ein solcher Zugkrafteinbruch jedoch eine erhebliche Komforteinbusse, die von Kundenseite nicht akzeptiert wird.

Es ist daher eine Aufgabe der vorliegenden Erfindung ein Zwei - Gang - Getriebe zur Übertragung eines Antriebsmomentes in einem Antriebsstrang eines Fahrzeuges, vorzugsweise für den Einsatz in einem Antriebsstrang für Elektrofahrzeuge, in einem Antriebsstrang für Hybridfahrzeuge oder in einem Zusatzantriebsstrang für Hybridfahrzeuge anzugeben, mit dem eine Schaltung ohne Zugkraftunterbrechung bzw. eine Schaltung mit verminderter Zugkraftunterbrechung (d.h. mit teilweisem Auffüllen des Zugkrafteinbruches), d.h. eine "Lastschaltung", auch ohne Verwendung eines Doppelkupplungsgetriebes mit vollwertiger Doppelkupplung mit zwei automatisierten und regelbaren Kupplungen ermöglicht ist.

Diese Aufgabe wird erfindungsgemäß gelöst durch ein Zwei - Gang - Getriebe gemäß Anspruch 1.

Besondere Ausführungsarten der Erfindung sind in den abhängigen Ansprüchen angegeben.

Das erfindungsgemäße Zwei - Gang - Getriebe umfasst dementsprechend eine Kombination einer "vollwertigen" regelbaren Kupplung mit einer ausschließlich schaltbare Kupplung, welche beispielsweise als Bremse ausgeführt sein kann, und folglich nicht regelbar ist, d. h. als 0/1-Stellglied entweder vollständig offen oder vollständig geschlossen ist. Wird bei diesem Aufbau die regelbare Kupplungseinrichtung geschlossen und damit der Planetenradträger gegenüber der Eingangswelle festlegt, so wird der Planetensatz verblockt. Diese Funktion wird ebenfalls dann erreicht, wenn die regelbare Kupplungseinrichtung den Planetenradträger gegenüber dem Hohlrad festlegt.

Der Antrieb kann dabei vorzugsweise als Elektromaschine ausgebildet sein, wobei ein Rotor der Elektromaschine mit der Eingangswelle verbunden ist. Der zum Betrieb der Elektromaschine notwendige Strom kann hierbei aus einem Energiespeicher (z.B. einer Batterie im Fahrzeug) entnommen oder von einem Verbrennungsmotor in Verbindung mit einem Generator oder einer Brennstoffzelle erzeugt werden.

Weiterhin kann das Übertragungselement über eine Vorbelastungseinrichtung im unbetätigten Zustand der Betätigungseinrichtung in einen formschlüssigen Kontakt mit dem das Planeten-getriebe abstützenden Gehäuse vorbelastet sein, wodurch das Übertragungselement als ein Teil einer Parksperre ausgebildet ist

Desweiteren kann die Betätigungseinrichtung in einer Funktionsnulllage den formschlüssigen Kontakt zwischen Gehäuse und Übertragungselement und damit die Parksperre aufheben, wobei in dieser Funktionsnulllage noch kein Reibkontakt zwischen den Lamellen der Kupplung besteht, so dass die regelbare Kupplung im Grundzustand offen ausgebildet ist. Ist die regelbare Kupplung im Grundzustand offen, so liegt der formschlüssige Kontakt der Parksperre also in einem offenen Zustand der Kupplung vor.

Die schaltbare Kupplung kann als ein Ein/Aus-Stellglied (beispielsweise mit einem Magnetschalter) ausgebildet sein, mit dem das Hohlrad gegenüber dem Gehäuse festlegbar ist. Dabei kann die schaltbare Kupplung im Grundzustand offen ausgebildet sein. Dadurch, dass die schaltbare Kupplung stromlos offen ist und erst durch bestromen des Aktors die schaltbare Kupplung geschlossen wird, ergibt sich ein stromlos sicherer Zustand mit einem momentenfreien Getriebe. Weiterhin kann das Hohlrad auf der Ausgangswelle drehbar abgestützt sein.

Die vorliegende Erfindung wird nachfolgend anhand bevorzugter Ausführungsbeispiele in Verbindung mit den zugehörigen Figuren näher erläutert. In diesen zeigen:
- Fig. 1: Ein Prinzipschaltbild eines ersten Ausführungsbeispieles eines Zwei - Gang - Planeten - Getriebes,
- Fig. 2: einen Halbschnitt des Zwei - Gang - Planeten - Getriebes nach Fig. 1,
- Fig. 3: ein Prinzipschaltbild eines weiteren Ausführungsbeispieles des Zwei - Gang - Planeten - Getriebes,
- Fig. 4: eine Darstellung eines Schaltablaufes für eine Zughochschaltung als Diagramm Drehmoment über Zeit,
- Fig. 5: eine Darstellung des Schaltablaufes nach Fig. 4 im E-Maschinenkennfeld Drehmoment über Drehzahl,
- Fig. 6: eine Darstellung eines weiteren Schaltablaufes für eine Zughochschaltung als Diagramm Drehmoment über Zeit und
- Fig. 7: ein Prinzipschaltbild eines Zwei - Gang - Getriebes mit "wollwertiger" Doppelkupplung, mit dem ebenfalls die Schaltabläufe nach den Fig. 4 bis 6 durchführbar sind.

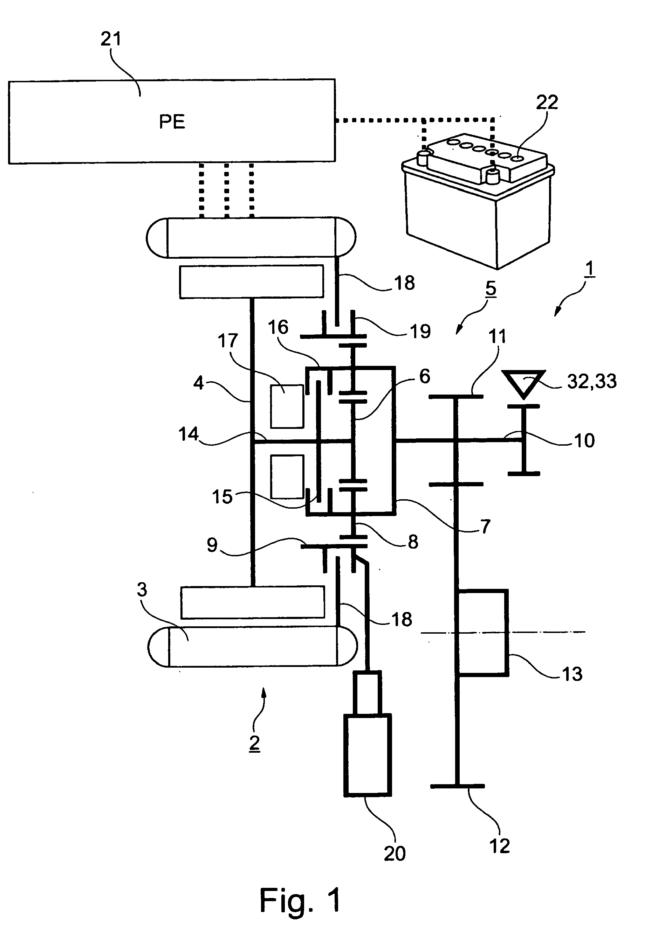

In Fig. 1 ist der prinzipielle Aufbau eines ersten Ausführungsbeispieles des vorliegenden Zwei - Gang - Planeten - Getriebes dargestellt, also eines Getriebes, welche eine Schaltung ohne Zugkraftunterbrechung oder eine Schaltung mit weitgehender Reduzierung des Zugkrafteinbruches durchführen kann. Das Maß an Reduzierung der vorgesehenen Zugkraftauffüllung hängt letztlich von der Bewertung durch den Nutzer des Fahrzeuges ab, die bei Auslegung des Schaltvorganges berücksichtigt werden kann.

Ein weiterer Vorteil des nachfolgend vorgestellten Aufbaus ist, dass die notwendige Aktorik für die regelbare Kupplung gleichzeitig die Betätigung für die Parksperre übernimmt, wodurch sich ein Steuer- und Regelungsvorteil sowie eine Vereinfachung des Aufbaues und eine Reduktion der Kosten ergibt.

Fig. 1 zeigt hierbei die Verschaltung der Komponenten des Antriebsstranges 1, nämlich Elektromotor 2 mit Stator 3 und Rotor 4, Zwei - Gang - Planeten - Getriebe 5 mit Sonnenrad 6, Planetenradträger 7, Planetenrädern 8 und Hohlrad 9, Abtriebswelle 10, auf dieser Abtriebswelle befestigte Abtriebszahnrad 11, mit diesem Abtriebszahnrad 11 kämmenden Zahnrad 12, Differential 13, sowie Parksperre 32,33.

Wie Fig. 1 entnehmbar, ist zwischen dem Planetenradträger 7 und einer Eingangswelle 14 eine regelbare (vorliegend: nasse) Kupplungseinrichtung mit einem Innenlamellenträger 15 (als einem Ausführungsbeispiel eines inneren Lamellenträgers) und einem Außenlamellenträger 16 (als einem Ausführungsbeispiel eines äußeren Lamellenträgers) sowie der Betätigungseinrichtung 17 angeordnet. Die regelbare Kupplung ist in einem Grundzustand (betätigungsfreier Zustand der Kupplung) offen ausgebildet, d.h. ohne Reibkontakt zwischen den Lamellen.

Über die Wirkung der Betätigungseinrichtung 17 können Reiblamellen der Innen- und Außenlamellenträger 15, 16 miteinander in Reibkontakt gepresst werden, wodurch die Eingangswelle 14 mit dem Planetenradträger 7 verbindbar ist.

Alternativ hierzu könnte auch eine trockene Kupplungseinrichtung verwendet werden.

Wie weiterhin Fig. 1 entnehmbar ist zwischen einem Gehäuse 18, an dem unter anderem auch der Stator 3 des E-Motors 2 abgestützt ist, und dem Hohlrad 9 eine schaltbare Kupplung 19 angeordnet, wobei im geschlossenen Zustand der schaltbaren Kupplung 19 das Gehäuse 18 mit dem Hohlrad 9 verbunden ist und wobei im offenen Zustand der schaltbaren Kupplung 19 das Hohlrad 9 frei gegenüber dem Gehäuse 18 drehbar ist.

Die schaltbare Kupplung 19 ist gemäß dem bevorzugten Ausführungsbeispiel im Grundzustand geschlossen und wird über den Betätigungsaktor 20 geöffnet. Die Umkehrung dieser Anordnung (Kupplung 19 im Grundzustand geöffnet und Schließen der Kupplung über den Betätigungsaktor) ist aber auch denkbar.

Als ein möglicher Betätigungsaktor 20 (d.h. als ein schaltbares Stellglied) kann beispielsweise ein Magnetschalter verwendet werden.

Der Stator 3 wird über die Leistungselektronik 21 mit Strom aus einer Speichereinrichtung 22, z. B. einer leistungsstarken Autobatterie versorgt.

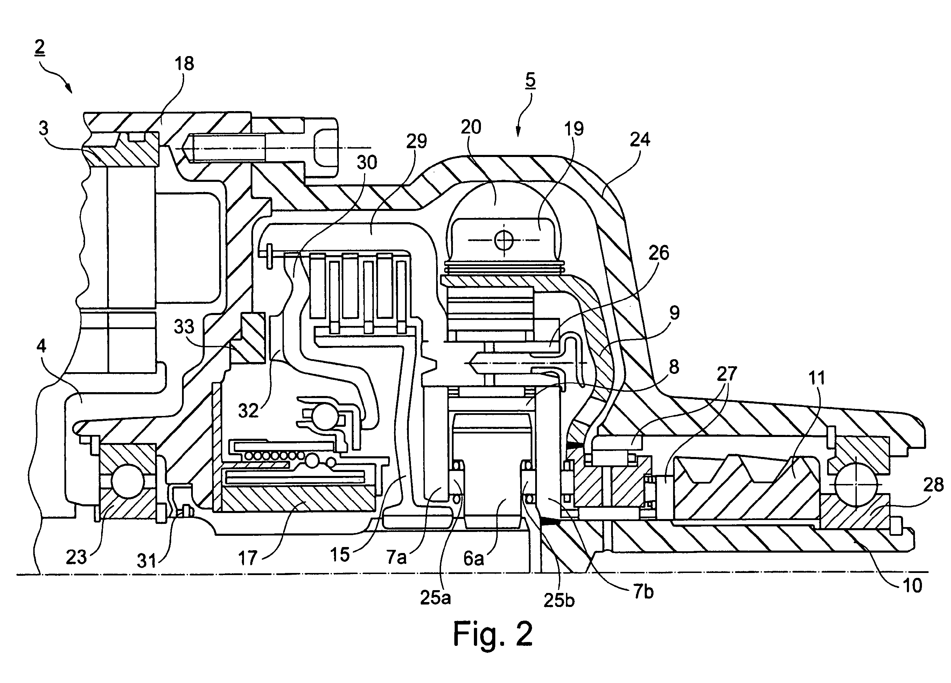

In Fig. 2 ist der in Fig. 1 gezeigte prinzipielle Aufbau in eine konkrete Konstruktion als einem möglichen Ausführungsbeispiel umgesetzt.

So zeigt Fig. 2 den Elektromotor 2 mit dem Stator 3, der am Gehäuse 18 befestigt ist und mit dem Rotor 4, der mit dem Eingangswelle 14 verbunden und über das Lager 23 im Gehäuse drehbar 18 abgestützt ist. Die einzelnen Komponenten des Elektromotors 2 sowie die Anbindung an einen Energiespeicher 22 über eine Leistungselektronik 21 sind bekannt. Daher wird nachfolgend auf detaillierte Ausführungen hierzu verzichtet.

Am Gehäuse 18 ist eine Kupplungsglocke 24 über Schraubverbindungen befestigt. In dem vom Gehäuse 18 und der Getriebeglocke 24 abgegrenzten Bereich sind das Planeten-Getriebe 5, sowie die regelbare Kupplung 15,16 und die schaltbare Kupplung 19 angeordnet. Der abgegrenzte Bereich ist vorliegend ein Nassbereich, da die regelbare Kupplung 15,16 als Nasskupplung ausgebildet ist.

Das Sonnenrad 6 des Planetengetriebes ist gebildet aus einem Zahnrad 6A, welches über eine Innenverzahnung an einer Außenverzahnung der Eingangswelle 14 drehfest abgestützt ist. Das Zahnrad 6A ist zudem über Axiallager 25A, 25B beidseitig im Planetenradträger 7 mit der motorseitigen Platte 7A und der abtriebsseitigen Platte 7B abgestützt.

Die motorseitige Platte 7A und die abtriebsseitige Platte 7B sind über Stifte 26 miteinander verbunden, wobei diese Stifte 26 die Planetenräder 8, welche mit dem Zahnrad 6A kämmen drehbar über Nadellager, Gleitbuchen oder ähnliche Abstützungseinrichtungen lagem.

Die Planetenräder 8 wiederum kämmen mit dem Hohlrad 9, wobei das Hohlrad 9 auf der Ausgangswelle 10 über ein Nadellager oder eine ähnliche Abstützung abgestützt ist. Das Hohlrad 9 ist weiterhin über Axiallager gegenüber der abtriebsseitigen Scheibe 7B und gegenüber de Abtriebszahnrad 11 drehbar gelagert. Über ein weiteres Lager ist das Hohlrad 9 gegenüber der Kupplungsglocke 24 drehbar abgestützt, wobei zum Toleranzausgleich radial und/oder axial Unterlegscheiben (Shimm-Scheiben 27) vorgesehen sind.

Die Abtriebswelle 10 ist über ein Festlager 28 ebenfalls in der Getriebeglocke 24 gelagert.

Die antriebsseitige Scheibe 7A weist in einem radial äußeren Bereich eine topfartige Fortsetzung 29 auf, die als äußerer Lamellenträger 16 der Nasskupplung zwischen Planetenradträger und Eingangswelle 14 ausgebildet ist. Korrespondierend zum äußeren Lamellenträger 16 umfasst die Nasskupplung den inneren Lamellenträger 15, der als mit der Eingangswelle 14 verzahnter Flansch ausgebildet ist.

Die äußeren und inneren Reiblamellen werden über ein Übertragungselement 30 (wird üblicherweise auch als "Drucktopf" bezeichnet) miteinander in Reibkontakt gepresst.

Eine Verlagerung des vorliegend im wesentlichen starr ausgebildeten Übertragungselementes 30 (d. h. es findet keine Kraftübersetzung im Rahmen eines Hebelverhältnisses statt) erfolgt über die Betätigungseinrichtung 17, die als Federbandaktor ausgebildet ist, wie von der Anmelderin beispielsweise in der DE 100 33 649 A1, der DE 10 2005 017 026 A1 und der DE 10 2005 025 266 A1 offenbart wurde. Dieser Federbandaktor kann beispielsweise elektrisch betrieben werden. Auch alternative Ausbildungen des Federbandaktors oder andere Betätigungsaktoren (wie Rampenscheibenaktoren, Hebelaktoren, Wipphebelaktoren, usw.) sind denkbar. Der vorliegende Federbandaktor weist jedoch besonders günstige Abmessungen zum Einbau an der in Fig. 2 gezeigten Stelle auf.

Zwischen dem Hohlrad 9 und der Getriebeglocke 24 ist eine Bremseinrichtung 19 angeordnet, welche als schaltbare Kupplung wirkt.

Die Getriebeglocke 24 ist gegenüber dem Gehäuse 18 über eine Dichteinrichtung 31 abgedichtet, welche in der Darstellung gemäß Fig. 2 links oder rechts des Lagers 23 angeordnet sein kann. Über diese Dichtung 31 ist der Nassraum mit der regelbaren Kupplung zwischen Planetenradträger und Eingangswelle 14 und der schaltbaren Kupplung 19 zwischen Hohlrad und Kupplungsglocke 24 gegenüber dem Trockenraum, in welchem der Elektromotor 2 aufgenommen ist, abdichtbar.

Zur Schmierung der verwendeten Lager sind wie Figur 2 entnehmbar an unterschiedlichen Stellen Bohrungen vorgesehen, wie z. B. in den Stiften 26 zur Schmierung der Lager der Planetenräder 8. Auch in der Abtriebswelle 10 ist eine Kernbohrung in Verbindung mit Radialbohrungen vorgesehen zur Schmierung der Lager zur Abstützung des Hohlrades 9.

Das Übertragungselement 30 umfasst zudem eine oder mehrere Vorsprünge 32, welche mit korrespondierenden Ausnehmungen im Gehäuse 18, ausgebildet beispielsweise über die am Gehäuse 18 befestigten Elemente 33, in Eingriff bringbar sind. In einer Funktionsnulllage des Betätigungsaktors 17 ist das Übertragungselement mit den Vorsprüngen 32 gegenüber dem Gehäuse 18 frei drehbar, wobei zugleich noch kein Reibkontakt zwischen den Reiblamellen der schaltbaren Kupplung vorliegt. Wird jedoch das Übertragungselement aus dieser Funktionsnulllage weiter in Fig. 2 nach links verschoben, so gelangen die Vorsprünge 32 in Kontakt mit den Ausnehmungen 33 im Gehäuse 18, wodurch das Übertragungselement und damit das mit dem Übertragungselement verbundene topfartige und als Außenlamellenträger dienende Bauteil 29 gegenüber dem Gehäuse 18 festgelegt werden. Diese Verschiebung erfolgt vorliegend dann, wenn der Betätigungsaktor 17 stromlos ist. Da der Planetenradträger 7 fest mit der Abtriebswelle 10 verbunden ist, wird zudem die Abtriebswelle gegen das Gehäuse 18 festgelegt. Hierdurch ergibt sich die Möglichkeit, die Abtriebswelle zu blockieren und eine Parksperre zu schaffen.

Die Parksperre wird also dadurch erreicht, dass die Betätigungseinrichtung 17 in ihren betätigungskraftfreien Zustand versetzt wird, also bei dem vorliegend verwendeten Federbandaktor ein stromloser Zustand vorliegt. Hierdurch wird der Betätigungsschlitten in seine hintere Endlage und damit die Vorsprünge 32 mit den Ausnehmungen 33 in Kontakt gebracht.

Durch eine "Grundbestromung" wird das Übertragungselement 30 ausgehend von dieser hinteren Endlage nach rechts verschoben, wodurch die Parksperre aufgehoben wird, ohne dass bereits ein Kontakt zwischen der Eingangswelle 14 und dem Planetenradträger über die Reibverbindung der regelbaren Kupplung vorläge. Entsprechend wird die Funktionsnulllage eingestellt.

Vorstehend wird also ein erstes Ausführungsbeispiel eines Getriebes beschrieben, welches nur eine regelbare Kupplung aufweist. Die zweite Kupplung wird hingegen als Bremse ausgeführt und soll nicht regelbar sein, d. h. sie dient als 0/1-Stellglied, welches nur einen vollständig offenen oder einen vollständig geschlossenen Zustand einstellen kann.

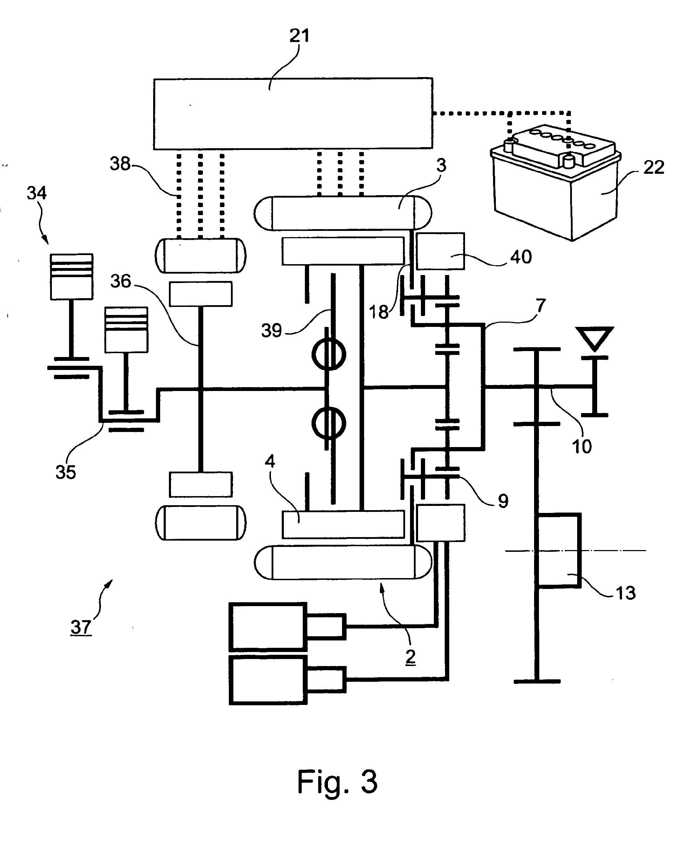

Die vorstehend beschriebene bevorzugte Ausführungsform des vorliegenden Zwei - Gang - Planeten - Getriebes ist zwar bevorzugt, jedoch nicht als einzige Ausführungsform der vorliegenden Erfindung zu verstehen. Als eine alternative Ausführung ist die Prinzipdarstellung nach Fig. 3 angegeben, welche die Anwendung des vorliegenden Konzeptes in einem Hybridantriebsstrang abbildet. Der Hybridantriebsstrang umfasst den Verbrennungsmotor 34, der vorzugsweise als Zweizylinderboxermotor ausgebildet sein kann. Die Kurbelwelle 35 des Motors 34 ist mit einem Rotor 36 einer ersten Elektromaschine 37 verbunden, welche als Startergenerator für den Verbrennungsmotor 34 dienen kann. Hierbei ist ein Stator 38 des Verbrennungsmotors 37 mit der Leistungselektronik 21 verbunden. Der Rotor 36 des Startergenerators 37 ist über eine Kupplungseinrichtung (vorliegend eine "normale" Trennkupplung) mit der Kupplungsscheibe 39 einschließlich zugehöriger Betätigungseinrichtungen (welche in Fig. 3 nicht im Einzelnen gezeigt sind) mit dem Rotor 4 des Elektromotors 2 verbindbar. Der Stator 3 ist wiederum über die Leistungselektronik 21 mit einem Energiespeicher 22 (symbolisiert über die Batterie gemäß Fig. 1 oder 3) verbunden.

Das Ausführungsbeispiel nach Fig. 3 umfasst also eine Trennkupplung mit der Kupplungsscheibe 39 mit der eine Verbindung zwischen dem Verbrennungsmotor 34 und dem Rotor der Elektromaschine 3 herstellbar ist.

Vergleichbar dem Ausführungsbeispiel nach Fig. 1 ist der Rotor der Elektromaschine 3 mit einem Sonnenrad des Zwei-Gang-Planeten-Getriebes verbunden. Mit dem Sonnenrad kämmen wiederum Planetenräder, die an einem Planentenradträger 7 abgestützt sind. Die Planetenräder kämmen zudem mit dem Hohlrad 9.

Bei dem vorliegenden Ausführungsbeispiel nach Fig. 3 ist die regelbare Kupplung zwischen Planetenradträger und Hohlrad vorgesehen, um den Planetensatz zu verblocken. Die schaltbare Kupplung ist zwischen Hohlrad und Gehäuse vorgesehen. Mit dieser Anordnung können beide Kupplungen über eine Aktorik 40 geschalten bzw. geregelt werden.

Hierfür ist am Gehäuse 18 die Betätigungseinrichtung 40 angeordnet, mit der der Planetenradträger 7 gegenüber dem Gehäuse und das Hohlrad 9 gegenüber dem Planetenradträger festlegbar sind. Der Planetenradträger 7 ist wiederum fest mit der Abtriebswelle 10 verbunden, welche mit einem Differenzial 13 in Verbindung steht.

Die übrigen Merkmale entsprechen den im Zusammenhang mit Fig. 1 diskutierten Merkmalen. Auf Wiederholung wird entsprechend verzichtet.

Die Schaltung der vorstehend beschriebenen Ausführungsbeispiele, also des E-Fahrzeugantriebes gemäß Fig. 1 oder des Hybridantriebes gemäß Fig. 3 erfolgt durch Übernahme des an der schaltbaren Kupplung anliegenden Drehmomentes auf die regelbare Kupplung solange bis das Drehmoment an der nicht-regelbaren Kupplung innerhalb adaptierbarer Grenzen abgebaut ist. Hiernach wird die schaltbare Kupplung geöffnet und im Anschluss in Drehzahlregelung der Elektromaschine dessen Drehzahl generatorisch auf den zweiten Gang gebremst.

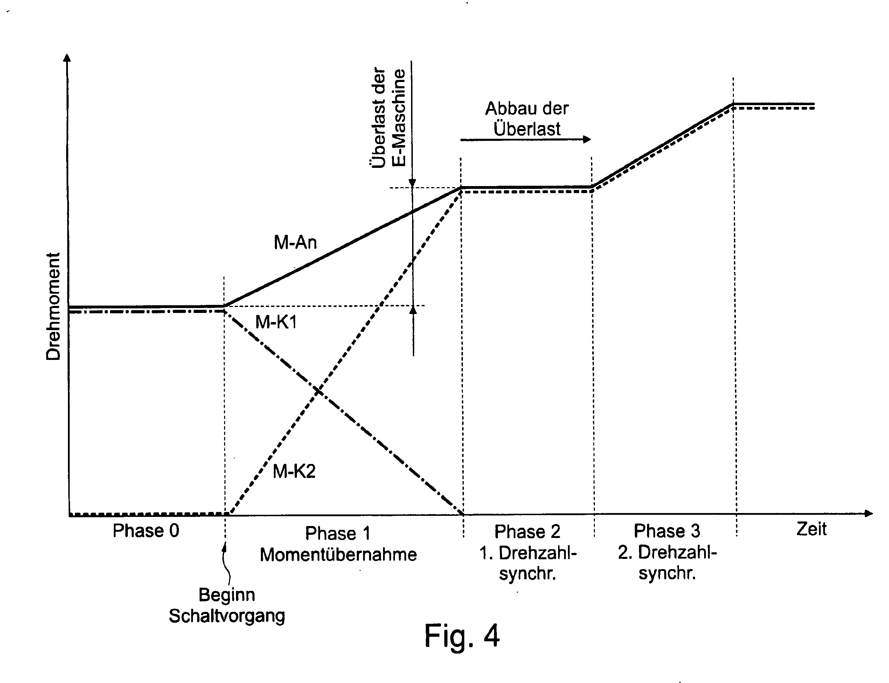

In Fig. 4 ist ein solcher Schaltvorgang dargestellt, welcher in seinen Grundlagen in der Anmeldung DE 10 2005 037 515 der Anmelderin für ein Parallelschaltgetriebe dargestellt ist. So ist Fig. 4 eine erste Phase der Schaltung (d. h. die Momentübernahme) entnehmbar, in welcher die regelbare Kupplung schlupfend (also schrittweise) das Drehmoment des Antriebes von der zu diesem Zeitpunkt noch geschlossenen regelbaren Kupplung übernimmt. In Fig. 4 ist die regelbare Kupplung mit K2 und die schaltbare Kupplung mit K1 bezeichnet, so dass die der Punkt der Linie M K2 das Moment ausgehend vom Beginn des Schaltvorganges an der regelbaren Kupplung darstellt und die strichpunktierte Linie M K1 das an der schaltbaren Kupplung anliegende Moment darstellt.

Wie dieser Darstellung gemäß Fig. 4entnehmbar, übernimmt die Kupplung K2 schlupfend das Drehmoment des Antriebes und führt dieses direkt über den Planetenträger auf die Differentialstufe. Würde während dieser ersten Phase das Antriebsmoment des Antriebes nicht erhöht, so ergäbe sich ein Zugkrafteinbruch mit der Höhe der Gangspreizung zwischen den zwei Gangstufen des Zweigangplanetengetriebes. Um diesen Einbruch zu reduzieren bzw. vollständig zu vermeiden, wird die E-Maschine parallel zu oben genannter Momentenübernahme von der schaltbaren Kupplung auf die regelbare Kupplung in eine Überlast gebracht. Diese Überlast ist in Fig. 4 anhand der Kurve M-AN und die Bezeichnung Überlast der E-Maschine ersichtlich. Die Höhe der jeweiligen Überlast ist abhängig den gewählten Komfortbedingungen, sowie der maximalen Überlastfähigkeit des elektrischen Systems und kann 0 bis 100% betragen.

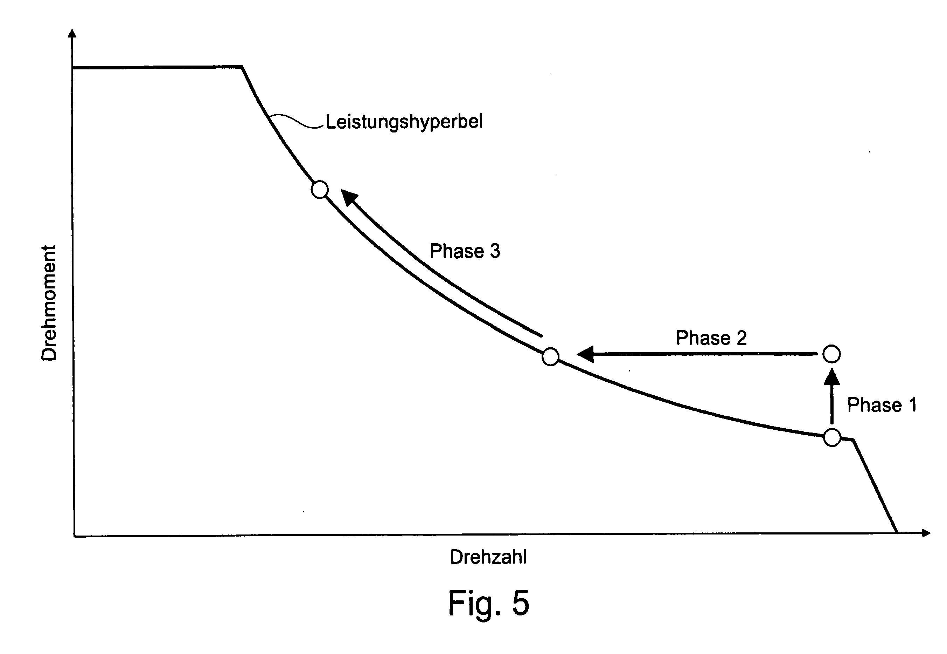

Nach der vollständigen Übernahme durch die regelbare Kupplung K2 wird die schaltbare Kupplung K1 lastfrei und wird entsprechend geöffnet. Im Anschluss wird in Phase (erste Drehzahlsynchronisierung) bei konstant gehaltenen Antriebsmoment die Drehzahl der E-Maschine reduziert und damit die Überlast sowie der Schlupf an der regelbaren Kupplung K2 abgebaut. Dieser Vorgang ist auch im Rahmen von Fig. 5 ersichtlich, wobei anhand der abgebildeten Pfeile der Drehmoment/Drehzahlverlauf in Phase 1 mit der Drehmomenterhöhung bei konstanter Drehzahl und dann die Drehzahlerniedrigung bei konstantem Moment ersichtlich sind.

Ist die Drehzahl der E-Maschine so weit reduziert, dass die Überlast abgebaut ist (in Fig. 5 wurde wieder die Gleichgewichtskurve für den jeweiligen Elektroantrieb erreicht) erfolgt in Phase 3 der weitere Schlupfabbau an der regelbaren Kupplung K2 entlang der Linie der Dauerleistung (Leistungshyperbel) der Elektromaschine.

Vorstehend wird dementsprechend ein Zweiganglastschaltplanetengetriebe offenbart, wobei ein Elektroantrieb auf das Sonnenrad wirkt und wobei das Hohlrad über ein Null/Eins-Stellglied schaltbar gegen ein Gehäuse festlegbar ist und wobei der Planetenträger des Planetengetriebes mit dem Abtrieb verbunden sowie mit dem Sonnenrad per regelbare Kupplung verbindbar ist. Vorliegend ist der Stellhebel der regelbaren Kupplung Teil der Parksperre, wobei nach dem Auslegen der Schaltstellung P zunächst der Aktor in seine Funktionsnulllage gefahren wird, d. h. er wird durch ein Zurücklaufen hinter diese Nulllage die Parksperre aktivieren. Vorliegend wird dieser Vorgang stromlos durchgeführt. Hierzu ist die regelbare Kupplung im betätigungskraftlosen Zustand offen und wird durch eine Feder aktiv aufgedrückt. Zudem ist der Aktor nicht selbsthemmend ausgebildet.

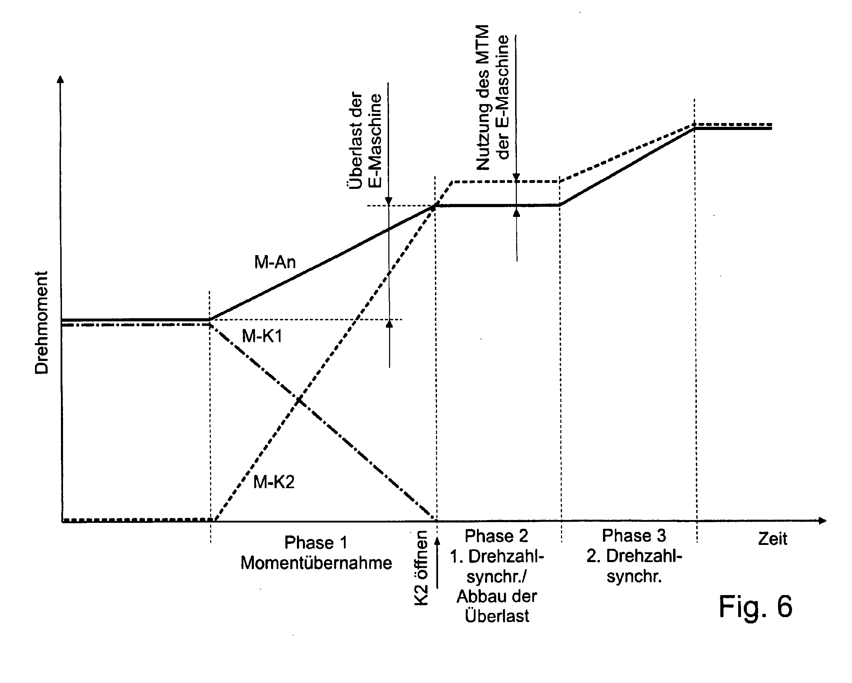

In Fig. 6 ist ein weiterer Schaltablauf für eine Zughochschaltung abgebildet, wobei in der ersten Phase der Schaltung die K2 schlupfend das Drehmoment des Antriebes übernimmt und wobei die K2 das übernommene Moment direkt über den Planetenträger auf die Differenzialstufe führt. Wenn während dieser Phase das Antriebsmoment nicht erhöht wird, ergibt sich ein Zugkrafteinbruch mit der Höhe der Gangspreizung. Um diesen Einbruch zu reduzieren, wird die E-Maschine parallel zu o.g. Momentübernahme in eine Überlast gebracht. Die Höhe der Überlast ist abhängig von Komfortbedingungen sowie maximaler Überlastfähigkeit des elektrischen Systems und kann 0-100% betragen. Nach der vollständigen Übernahme durch K2 wird K1 Lastfrei und wird geöffnet. Im Anschluss wird in Phase 2 bei konstantem Antriebsmoment die Drehzahl der E-Maschine reduziert und damit die Überlast sowie der Schlupf an K2 abgebaut. Dazu kann das Moment von K1 über das Antriebsmoment erhöht werden, um das Massenträgheitsmoment (MTM) der E-Maschine für zusätzlichen Vortrieb. Dieser MTM Einfluss führt bei kleinen Abtriebsmomenten u.U. so weit, daß das Drehmoment der E-Maschine während der Drehzahlanpassung reduziert werden muss. Ist die Drehzahl der E-Maschine soweit reduziert, daß die Überlast abgebaut ist, erfolgt in Phase 3 der weitere Schlupfabbau an K2 auf der Linie der Dauerleistung (Leistungshyperbel) der E-Maschine.

Auch mit einem Doppelkupplungsgetriebe bzw. einem unterbrechungsfreies, automatisiertes Schaltgetriebe ("USG"), kann ein Zugkrafteinbruch vermieden bzw. reduziert werden, da aufgrund der mit einem solchen Doppelkupplungsgetriebe möglichen Überschneidungsschaltung eine kontinuierliche Zugkraftübertragung ermöglicht ist.

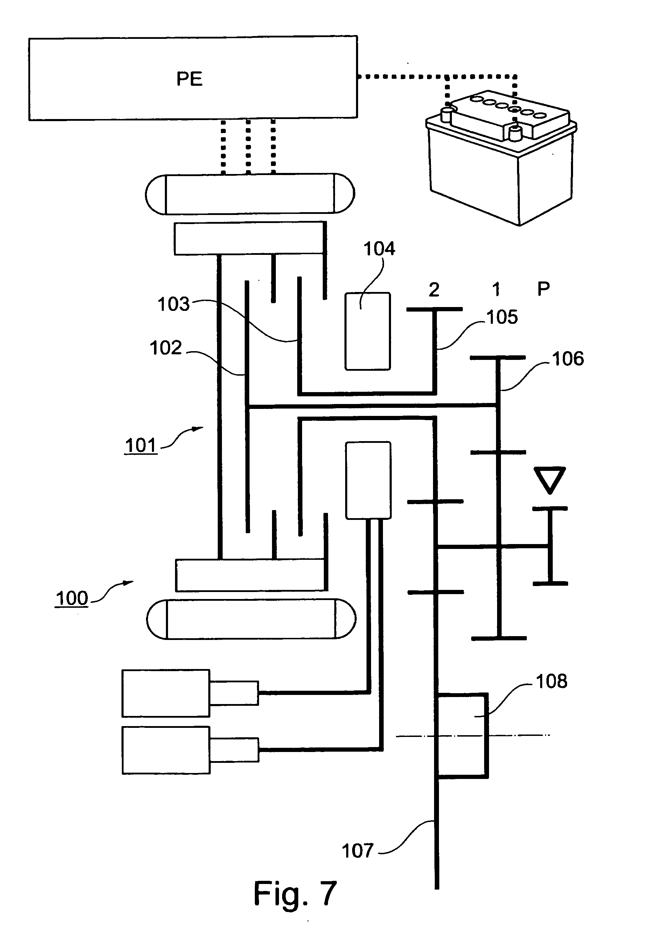

In Fig. 7 ist ein solcher möglicher Aufbau mit einem Elektroantrieb 100, einer Doppelkupplung 101 mit zwei regelbaren Kupplungen mit ersten und zweiten Kupplungsscheiben 102 und 103, einem Betätigungssystem 104 mit zwei voneinander unabhängig betätigbaren Betätigungseinrichtungen für die Kupplungen, einem Zwei-Gang-Getriebe mit einer 1. Übersetzungsstufe 105, die mit der zweiten Kupplungsscheibe 103 verbunden ist und mit einer 2. Übersetzungsstufe 106, die mit der ersten Kupplungsscheibe 102 verbunden ist, und mit einem Abtrieb 107 mit dem Differential 108 dargestellt. Als Getriebe kann beispielsweise ein Stirnradgetriebe mit Stirnradpaarungen als 1. und 2. Übersetzungsstufe verwendet werden.

Auch mit dem in Fig. 7 dargestellten Zwei - Gang - Getriebe mit "vollwertiger" Doppelkupplung sind die Schaltabläufe nach den Fig. 4 bis 6 durchführbar. Dabei wird eine der Kupplungen als regelbare Kupplung und die andere als schaltbare Kupplung betrieben.

Ein solcher Antriebstrang mit Doppelkupplungsgetriebe und "vollwertiger" Doppelkupplung umfasst zwar zwei automatisierte und getrennt voneinander regelbare Kupplungen, welche jeweils mit einem der Teilgetriebe verbunden sind und welche über jeweils unabhängige Betätigungseinrichtungen betätigt werden müssen, wodurch sich ein verhältnismäßig komplexer Aufbau verbunden mit hohen Kosten ergibt, allerdings bedingt der geänderte Schaltablauf gerade bei der Zughochschaltung einen Zeitgewinn. Eine höhere Schaltgeschwindigkeit verringert aber den maximal auszugleichenden Zugkrafteinbruch und erhöht gleichzeitig den Komfort des Schaltablaufes.

### Bezugszeichenliste

- 1: Zweiganglastschaltgetriebes
- 2: Elektromotor
- 3: Stator
- 4: Rotor
- 5: Planeten-Getriebe
- 6: Sonnenrad
- 6A: Zahnrad
- 7: Planetenradträger
- 7A: motorseitige Platte
- 7B: abtriebsseitige Platte
- 8: Planetenräder
- 9: Hohlrad
- 10: Abtriebswelle
- 11: Abtriebszahnrad
- 12: Zahnrad
- 14: Eingangswelle
- 15: Innenlamellenträger
- 16: Außenlamellenträger
- 17: Betätigungseinrichtung
- 18: Gehäuse
- 19: schaltbare Kupplung
- 20: Geschwindigkeitssensor
- 21: Leistungselektronik
- 22: Speichereinrichtung
- 23: Lager
- 24: Getriebeglocke
- 25A: Axiallager
- 25B: Axiallager
- 26: Stifte
- 27: Shimm-scheibe
- 30: Übertragungselement
- 31: Dichtung
- 34: Verbrennungsmotor
- 36: Rotor
- 37: Elektromaschine
- 38: Stator
- 39: Kupplungsscheibe
- 40: Betätigungseinrichtung

## Patentansprüche

1. Zwei - Gang - Getriebe zur Übertragung eines Antriebsmomentes in einem Antriebstrang (1) eines Fahrzeug mit einer durch eine Antriebeinheit antreibbaren Eingangswelle (14), einem Planeten-Getriebe (5) mit Sonnenrad (6) Planetenrädern (8), Planetenradträger (7) und Hohlrad (9) und einer Ausgangswelle (10), wobei das Sonnenrad (6) drehfest mit der Eingangswelle (14) und der Planetenradträger (7) drehfest mit der Ausgangswelle (10) verbunden sind, und mit einer regelbaren Kupplungseinrichtung mit der der Planetenradträger (7) entweder gegenüber der Eingangswelle (14) oder gegenüber dem Hohlrad (9) festlegbar ist, und mit einer ausschließlich schaltbaren Kupplungseinrichtung (19) mit der das Hohlrad (3) gegenüber einem das Planeten-Getriebe (5) abstützenden Gehäuse (18) festlegbar ist, **dadurch gekennzeichnet, daß** die regelbare Kupplungseinrichtung als Trocken - oder Nass kupplung mit einem inneren Lamellenträger (15) mit zumindest einer inneren Reiblamelle und einen äußeren Lamellenträger (16) mit zumindest einer äußeren Reiblamelle ausgebildet ist, wobei der innere Lamellenträger (15) mit der Eingangswelle (14) und der äußere Lamellenträger (16) mit dem Planetenradträger (7) drehfest verbunden bzw. integral mit diesem ausgebildet sind, oder wobei der innere Lamellenträger (15) mit dem Planetenradträger (7) und der äußere Lamellenträger (16) mit dem Hohlrad (9) verbunden bzw. integral mit diesem ausgebildet sind, und wobei die regelbare Kupplungseinrichtung eine Betätigungseinrichtung (17, 30) mit Betätigungsaktor (17) und Übertragungselement (30) umfasst, wobei das Übertragungselement (30) mit einem der Lamellenträger (15,16) verbunden ist, der Betätigungsaktor (17) am Gehäuse (18) abgestützt ist, und zwischen Übertragungselement (30) und Betätigungsaktor (17) ein Betätigungslager angeordnet ist.

2. Zwei - Gang - Getriebe nach Anspruch 1, wobei der Antrieb eine Elektromaschine (2) ist, und wobei ein Rotor (4) der Elektromaschine (2) mit der Eingangswelle (14) verbunden ist.

3. Zwei - Gang - Getriebe nach Anspruch 1 oder 2, wobei das Übertragungselement (30) über eine Vorbelastungseinrichtung im unbetätigtem Zustand der Betätigungseinrichtung in einen formschlüssigen Kontakt mit dem Gehäuse (18) vorbelastet ist, wodurch das Übertragungselement (30) als ein Teil einer Parksperre ausgebildet ist.

4. Zwei - Gang - Getriebe nach Anspruch 3, wobei die Betätigungseinrichtung (17) in einer Funktionsnullage den formschlüssigen Kontakt zwischen Gehäuse (18) und Übertragungs--element (30) und damit die Parksperre aufhebt.

5. Zwei - Gang - Getriebe nach Anspruch 4, wobei die regelbare Kupp-5. Zwei - Gang - Getriebe nach Anspruch 4, wobei die regelbare Kupplung im Grundzustand offen ausgebildet ist und in der Funktionsnullage noch kein Reibkontakt zwischen den Lamellen besteht.

6. Zwei - Gang - Getriebe nach einem der Ansprüche 1 bis 5, wobei die schaltbare Kupplung (19) als ein Ein / Aus - Stellglied ausgebildet ist, mit dem das Hohlrad (9) gegenüber dem Gehäuse (18) festlegbar ist, wobei die schaltbare Kupplung (19) im Grundzustand offen ausgebildet ist.

7. Zwei - Gang - Getriebe nach einem der Ansprüche 1 bis 6, wobei das Hohlrad (9) auf der Ausgangswelle (10) drehbar abgestützt ist.

## Claims

1. Two-speed transmission for the transfer of a drive torque in a drive train (1) of a vehicle, with an input shaft (14) drivable by a drive unit, with a planetary gear (5) having a sun wheel (6), planet wheels (8), a planet-wheel carrier (7) and ring wheel (9) and with an output shaft (10), the sun wheel (6) being connected fixedly in terms of rotation to the input shaft (14) and the planet-wheel carrier (7) being connected fixedly in terms of rotation to the output shaft (10), and with a regulatable clutch device, by means of which the planet-wheel carrier (7) can be secured either with respect to the input shaft (14) or with respect to the ring wheel (9), and with an only shiftable clutch device (19), by means of which the ring wheel (9) can be secured with respect to a housing (18) supporting the planetary gear (5), **characterized in that** the regulatable clutch device is designed as a dry or wet clutch with an inner lamella carrier (15) having at least one inner friction lamella and an outer lamella carrier (16) having at least one outer friction lamella, the inner lamella carrier (15) being connected fixedly in terms of rotation or being formed integrally with the input shaft (14) and the outer lamella carrier (16) being connected fixedly in terms of rotation or being formed integrally with the planet-wheel carrier (7), or the inner lamella carrier (15) being connected to or being formed integrally with the planet-wheel carrier (7) and the outer lamella carrier (16) being connected to or being formed integrally with the ring wheel (9), and the regulatable clutch device comprising an actuating device (17, 30) with an actuating actuator (17) and a transfer element (30), the transfer element (30) being connected to one of the lamella carriers (15, 16), the actuating actuator (17) being supported on the housing (18), and an actuating bearing being arranged between transfer element (30) and actuating actuator (17).

2. Two-speed transmission according to Claim 1, the drive being an electric machine (2), and a rotor (4) of the electric machine (2) being connected to the input shaft (14).

3. Two-speed transmission according to Claim 1 or 2, the transfer element (30) being preloaded via a preloading device into positive contact with the housing (18) in the non-actuated state of the actuating device, with the result that the transfer element (30) is designed as part of a parking brake.

4. Two-speed transmission according to Claim 3, the actuating device (17), in a neutral operating position, cancelling the positive contact between housing (18) and transfer element (30) and consequently the parking brake.

5. Two-speed transmission according to Claim 4, the regulatable clutch being designed to be open in the basic state and there being no frictional contact between the lamellae in the neutral operating position.

6. Two-speed transmission according to one of Claims 1 to 5, the shiftable clutch (19) being designed as an on/off actuating member, by means of which the ring wheel (9) can be secured with respect to the housing (18), the shiftable clutch (19) being designed to be open in the basic state.

7. Two-speed transmission according to one of Claims 1 to 6, the ring wheel (9) being supported rotatably on the output shaft (10).

## Revendications

1. Transmission à deux vitesses pour le transfert d'un couple d'entraînement dans une chaîne cinématique (1) d'un véhicule, comprenant un arbre d'entrée (14) pouvant être entraîné par une unité d'entraînement, un engrenage planétaire (5) avec une roue solaire (6), des satellites (8), un porte-satellites (7) et une couronne (9) et un arbre de sortie (10), la roue solaire (6) étant connectée de manière solidaire en rotation à l'arbre d'entrée (14) et le porte-satellites (7) étant connecté de manière solidaire en rotation à l'arbre de sortie (10), et comprenant un dispositif d'embrayage réglable avec lequel le porte-satellites (7) peut être fixé soit par rapport à l'arbre d'entrée (14) soit par rapport à la couronne (9), et comprenant un dispositif d'embrayage exclusivement commutable (19) avec lequel la couronne (9) peut être fixée par rapport à un boîtier (18) supportant l'engrenage planétaire (5), **caractérisée en ce que** le dispositif d'embrayage réglable est réalisé en tant qu'embrayage sec ou humide avec un support de disques internes (15) avec au moins un disque de friction interne et un support de disques externes (16) avec au moins un disque de friction externe, le support de disques internes (15) étant connecté de manière solidaire en rotation, ou étant réalisé intégralement avec l'arbre d'entrée (14) et le support de disques externes (16) étant connecté de manière solidaire en rotation ou étant réalisé intégralement avec le porte-satellites (7), ou le support de disques internes (15) étant connecté de manière solidaire en rotation, ou étant réalisé intégralement avec le porte-satellites (7) et le support de disques externes (16) étant connecté ou étant réalisé intégralement avec la couronne (9), et le dispositif d'embrayage réglable comprenant un dispositif d'actionnement (17, 30) avec un actionnement (17) et un élément de transfert (30), l'élément de transfert (30) étant connecté à l'un des supports de disques (15, 16), l'actionneur (17) étant supporté sur le boîtier (18), et un palier d'actionnement étant disposé entre l'élément de transfert (30) et l'actionneur (17).

2. Transmission à deux vitesses selon la revendication 1, dans laquelle l'entraînement est une machine électrique (2) et un rotor (4) de la machine électrique (2) est connecté à l'arbre d'entrée (14).

3. Transmission à deux vitesses selon la revendication 1 ou 2, dans laquelle l'élément de transfert (30) est précontraint par le biais d'un dispositif de précontrainte dans l'état non actionné du dispositif d'actionnement dans un contact par engagement par correspondance géométrique avec le boitier (18), de sorte que l'élément de transfert (30) soit réalisé sous forme de pièce d'un verrouillage de stationnement.

4. Transmission à deux vitesses selon la revendication 3, dans laquelle le dispositif d'actionnement (17) dans une position neutre de fonctionnement, supprime le contact par engagement par correspondance géométrique entre le boîtier (18) et l'élément de transfert (30) et donc le verrouillage de stationnement.

5. Transmission à deux vitesses selon la revendication 4, dans laquelle l'embrayage réglable est réalisé sous forme ouverte dans l'état de base et il n'existe encore aucun contact de friction entre les disques dans la position neutre de fonctionnement.

6. Transmission à deux vitesses selon l'une quelconque des revendications 1 à 5, dans laquelle l'embrayage commutable (19) est réalisé sous forme d'organe de commande marche/arrêt, avec lequel la couronne (9) peut être fixée par rapport au boîtier (18), l'embrayage commutable (19) étant réalisé sous forme ouverte dans l'état de base.

7. Transmission à deux vitesses selon l'une quelconque des revendications 1 à 6, dans laquelle la couronne (9) est supportée à rotation sur l'arbre de sortie (10).
